(19) Europäisches Patentamt
European Patent Office
Office européen des brevets

(11) EP 4 491 641 A1

(12) EUROPEAN PATENT APPLICATION
published in accordance with Art. 153(4) EPC

(43) Date of publication:
**15.01.2025 Bulletin 2025/03**

(21) Application number: **23766842.1**

(22) Date of filing: **07.03.2023**

(51) International Patent Classification (IPC):
***C08F 8/12*** *(2006.01)*

(52) Cooperative Patent Classification (CPC):
**C08F 8/12**

(86) International application number:
**PCT/JP2023/008579**

(87) International publication number:
**WO 2023/171666 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.03.2022 JP 2022034389**
**07.03.2022 JP 2022034390**

(71) Applicant: **SEKISUI CHEMICAL CO., LTD.**
**Osaka-shi, Osaka 530-0047 (JP)**

(72) Inventors:
- **TERAGUCHI, Yumiko**
  **Mishima-gun, Osaka 618-0021 (JP)**
- **NISHIMURA, Yohei**
  **Mishima-gun, Osaka 618-0021 (JP)**
- **ISHIKAWA, Yuki**
  **Mishima-gun, Osaka 618-0021 (JP)**
- **SUGIHARA, Shizuka**
  **Mishima-gun, Osaka 618-0021 (JP)**
- **TATENO, Shiori**
  **Koka-shi, Shiga 528-8585 (JP)**
- **NAKAJIMA, Nami**
  **Mishima-gun, Osaka 618-0021 (JP)**
- **ARAI, Yoshito**
  **Mishima-gun, Osaka 618-0021 (JP)**

(74) Representative: **Cabinet Beau de Loménie**
**158, rue de l'Université**
**75340 Paris Cedex 07 (FR)**

# (54) MODIFIED POLYVINYL ALCOHOL RESIN

(57) The present invention provides a modified polyvinyl alcohol resin having excellent solubility and less likely to form undissolved lumps when dissolved. Provided is a modified polyvinyl alcohol resin containing a structural unit containing a hydrophilic modifying group, the modified polyvinyl alcohol resin having a glass transition temperature (Tg) of 70°C or higher and a degree of crystallinity of 24% or lower as measured by DSC, and a hydroxy group content of 70 mol% or higher and a hydrophilic modifying group content of 0.01 mol% or higher and 12 mol% or lower as measured by $^1$H-NMR.

EP 4 491 641 A1

## Description

TECHNICAL FIELD

The present invention relates to modified polyvinyl alcohol resins.

BACKGROUND ART

Polyvinyl alcohol resins (hereinafter also "PVAs"), which are produced by saponifying polyvinyl acetate resins (hereinafter also "PVAcs"), are highly soluble in water and common as packaging materials for packing various substances such as agrochemicals, medicines, dyes, detergents, fertilizers, cosmetics, and sanitary goods. Taking advantage of the high solubility of PVA films in water, such packaging materials are used in applications where the packaging materials are directly put in aqueous solvents to be decomposed or dissolved therein to give solutions, or applications where the packaging materials opened in use are directly flushed with water. PVAs are also used in various other applications since they are colorless and transparent and have tough mechanical properties.

For example, Patent Literature 1 discloses a modified polyvinyl alcohol resin having a degree of saponification of 68 mol% or higher and lower than 99.9 mol% and a viscosity average degree of polymerization of 200 or higher and lower than 5,000 and having, in its side chains, esterifying-agent-derived double bonds in an amount of 0.01 mol% or more and less than 0.50 mol%. Patent Literature 1 states that the esterifying agent is a carboxylic acid having a carbon-carbon double bond or its derivative, and that the resin has a peak with a peak width of 2.85 min or greater and less than 3.79 min at 5% height from the baseline as measured by high-performance liquid chromatography (HPLC).

Patent Literature 2 discloses a PVA film containing a PVA, a nonionic surfactant, and an anionic surfactant. The PVA has a degree of polymerization of 200 or higher and 10,000 or lower and a degree of saponification of 60 mol% or higher and 95 mol% or lower and has an acidic functional group such as a carboxy group or a sulfonic acid group.

Patent Literature 3 discloses a vinyl alcohol film. The film contains a vinyl alcohol polymer having a hydroxyalkyl group and having a degree of polymerization of 3,000 or lower and a molecular weight distribution of 2.0 to 4.0.

CITATION LIST

- Patent Literature

Patent Literature 1: JP 2021-098802 A
Patent Literature 2: WO 2020/116414
Patent Literature 3: WO 2015/020046

SUMMARY OF INVENTION

- Technical problem

The polyvinyl alcohol resins disclosed in Patent Literatures 1 and 2 have improved solubility, but they do not fully meet the demand for less undissolved matter and more rapid dissolution. Polyvinyl alcohol resins with enhanced solubility in water are thus needed.

Moreover, the polyvinyl alcohol resins disclosed in Patent Literatures 1 and 2 may form undissolved lumps when dissolved in water, failing to provide a uniform aqueous solution. The vinyl alcohol polymer disclosed in Patent Literature 3 can improve optical characteristics of optical films, but it has room for improvement in solubility in water and tends to form undissolved lumps in water.

In view of the situation in the art, the present invention aims to provide a modified polyvinyl alcohol resin having excellent solubility and less likely to form undissolved lumps when dissolved.

- Solution to problem

The disclosure (1) relates to a modified polyvinyl alcohol resin containing a structural unit containing a hydrophilic modifying group, the modified polyvinyl alcohol resin having a glass transition temperature (Tg) of 70°C or higher and a degree of crystallinity of 24% or lower as measured by DSC, and a hydroxy group content of 70 mol% or higher and a hydrophilic modifying group content of 0.01 mol% or higher and 12 mol% or lower as measured by $^1$H-NMR.

The disclosure (2) relates to the modified polyvinyl alcohol resin according to the disclosure (1), wherein the

modified polyvinyl alcohol resin has a hard segment ($S_{30}$ component) and a soft segment ($L_{30}$ component), the two components being identified by measuring the modified polyvinyl alcohol resin by a solid echo method using pulse NMR at 30°C to give a free induction decay curve of $^1H$ spin-spin relaxation and subjecting the curve to waveform separation into two curves derived from the $S_{30}$ component and the $L_{30}$ component in order of shorter to longer relaxation time, and has a hard segment ($S_{80}$ component), a middle segment ($M_{80}$ component), and a soft segment ($L_{80}$ component), the three components being identified by measuring the modified polyvinyl alcohol resin by a Hahn echo method using pulse NMR at 80°C to give a free induction decay curve of $^1H$ spin-spin relaxation and subjecting the curve to waveform separation into three curves derived from the $S_{80}$ component, the $M_{80}$ component, and the $L_{80}$ component in order of shorter to longer relaxation time, and a percentage of the $L_{30}$ component [$L_{30}$ component/($S_{30}$ component + $L_{30}$ component)] multiplied by the relaxation time of the $L_{80}$ component gives a product [(percentage of $L_{30}$ component) × (relaxation time of $L_{80}$ component)] of 6.6 or greater.

The disclosure (3) relates to the modified polyvinyl alcohol resin according to the disclosure (1) or (2), wherein the hydrophilic modifying group is a carboxy group or its derivative.

The disclosure (4) relates to the modified polyvinyl alcohol resin according to any one of the disclosures (1) to (3), wherein the hydroxy group content as measured by $^1H$-NMR is 90 mol% or higher.

The disclosure (5) relates to the modified polyvinyl alcohol resin according to any one of the disclosures (1) to (4), wherein the degree of crystallinity as measured by DSC is 20% or lower.

The disclosure (6) relates to the modified polyvinyl alcohol resin according to any one of the disclosures (1) to (5), wherein the structural unit containing a hydrophilic modifying group is derived from a C3-C15 unsaturated fatty acid or its derivative.

The disclosure (7) relates to the modified polyvinyl alcohol resin according to any one of the disclosures (1) to (6), wherein the modified polyvinyl alcohol resin has a viscosity average degree of polymerization of 300 or higher and 3,500 or lower.

The disclosure (8) relates to the modified polyvinyl alcohol resin according to the disclosure (1), wherein the modified polyvinyl alcohol resin has a main peak m in a retention time range from 12 to 25 min and a half width of the main peak m of 2.5 min or less as measured by high-performance liquid chromatography using a gradient elution method in which a mixing ratio of a solvent A and a solvent B is changed with time, in the gradient elution method, the solvent A is a 0.1% by weight aqueous formic acid solution, the solvent B is methanol, a mobile phase flow rate is 0.8 ml/min, and the mixing ratio is linearly changed such that a proportion of the solvent A is 90% by weight at a start of measurement, maintained at 90% by weight for 10 min from the start of measurement, and reduced to 0% by weight after 20 min from the start of measurement, and the modified polyvinyl alcohol resin has a viscosity average degree of polymerization of 200 or higher and 5,000 or lower.

The disclosure (9) relates to the modified polyvinyl alcohol resin according to the disclosure (8), wherein a peak top of the main peak m in the retention time range from 12 to 25 min has a retention time of 17 min or shorter.

The disclosure (10) relates to the modified polyvinyl alcohol resin according to the disclosure (8) or (9), wherein the hydrophilic modifying group is a carboxy group or its derivative.

The disclosure (11) relates to the modified polyvinyl alcohol resin according to any one of the disclosures (8) to (10), wherein the modified polyvinyl alcohol resin has an acetyl group content of 2 mol% or lower as measured by $^1H$-NMR.

The disclosure (12) relates to the modified polyvinyl alcohol resin according to any one of the disclosures (8) to (11), wherein the modified polyvinyl alcohol resin has a main peak n in a retention time range from 12 to 25 min as measured by high-performance liquid chromatography using a gradient elution method in which a mixing ratio of a solvent A and a solvent B is changed with time, in the gradient elution method, the solvent A is water, the solvent B is methanol, a mobile phase flow rate is 0.8 ml/min, and the mixing ratio is linearly changed such that a proportion of the solvent A is 90% by weight at a start of measurement, maintained at 90% by weight for 10 min from the start of measurement, and reduced to 0% by weight after 20 min from the start of measurement, and the main peak n has a proportion of an area A to an area B [(area A/area B) × 100] of 0.5% or higher, where the area A is an area of the main peak n in a retention time range of 0.9X or less, X being a retention time of a peak top of the main peak n, and the area B is a total area of the main peak n.

The disclosure (13) relates to the modified polyvinyl alcohol resin according to any one of the disclosures (8) to (12), wherein the viscosity average degree of polymerization is 2,000 or lower.

The disclosure (14) relates to the modified polyvinyl alcohol resin according to any one of the disclosures (8) to (13), wherein the hydrophilic modifying group content as measured by $^1H$-NMR is 0.5 mol% or higher.

The disclosure (15) relates to the modified polyvinyl alcohol resin according to any one of the disclosures (8) to (14), wherein the structural unit containing a hydrophilic modifying group is derived from itaconic acid, acrylic acid, or a derivative of itaconic acid or acrylic acid.

The present invention is described in detail below.

After extensive studies, the present inventors have found out that a modified polyvinyl alcohol resin having a glass transition temperature (Tg) and a degree of crystallinity each in a predetermined range as measured by DSC and having a hydroxy group content and a hydrophilic modifying group content each in a specific range has excellent solubility

in water and is less likely to form undissolved lumps upon dissolution. The inventors thus completed the present invention.

The modified polyvinyl alcohol resin has a glass transition temperature (Tg) of 70°C or higher as measured by DSC.

A Tg in the above range can lead to less formation of undissolved lumps upon dissolution of the PVA or higher heat resistance.

The Tg is preferably 75°C or higher, more preferably 80°C or higher and is preferably 120°C or lower, more preferably 115°C or lower, still more preferably 110°C or lower. The Tg is preferably 70°C to 120°C, more preferably 75°C to 115°C, still more preferably 80°C to 110°C.

The Tg can be measured by a method in conformity with JIS K7121(1987).

The Tg of the modified polyvinyl alcohol resin can be adjusted by adjusting the type of the modifying group, the modifying group content, or the hydroxy group content.

The modified polyvinyl alcohol resin has a degree of crystallinity of 24% or lower as measured by DSC.

A degree of crystallinity in the above range can lead to improved solubility in water, particularly an improved dissolution rate.

The degree of crystallinity is preferably 0% or higher, for example 0.1% or higher, and is preferably 20% or lower, more preferably 18% or lower, still more preferably 15% or lower. The degree of crystallinity is preferably 0 to 24%, more preferably 0.1 to 20%, still more preferably 0.1 to 18%, further preferably 0.1 to 15%.

The degree of crystallinity can be measured by the following method, for example.

Specifically, the modified polyvinyl alcohol resin was subjected to differential scanning calorimetry using a thermal analyzer (available from Hitachi High-Tech Science Corporation, "DSC7000X") under the conditions below in a nitrogen atmosphere. The heat of fusion in the second heating is measured to measure the degree of crystallinity.

<Measurement conditions>

0°C (holding for 5 min) → (first heating at heating rate of 10°C/min) → 250°C → (cooling at cooling rate of 10°C/min) → 0°C (holding for 5 min) → (second heating at heating rate of 10°C/min) → 250°C

The heat of fusion is calculated from the area of a peak appearing between 130°C and 250°C in the second heating. As shown in FIG. 1, the area of the peak is determined as the area of the region surrounded by the straight line connecting the points A and B and the DSC curve. The point A is the point at which the DSC curve separates from a straight line drawn along the linear approximation portion of the DSC curve from 170°C toward the higher temperature side. The point B is the point on the DSC curve that shows the end-of-melt temperature. The degree of crystallinity is calculated by the following expression, assuming that the heat of fusion of a polyvinyl alcohol resin having a degree of crystallinity of 100% is 156 J/g.

$$\text{Degree of crystallinity (\%)} = \text{heat of fusion (J/g)} \div 156\ \text{(J/g)} \times 100$$

The degree of crystallinity of the modified polyvinyl alcohol resin can be adjusted by adjusting the amount of a catalyst used in saponification of vinyl acetate, the type or amount of the modifying group of the modified polyvinyl alcohol resin, the modifying group content of the modified polyvinyl alcohol resin, or the hydroxy group content of the modified polyvinyl alcohol resin.

Preferably, the modified polyvinyl alcohol resin has a hard segment ($S_{30}$ component) and a soft segment ($L_{30}$ component) and has a percentage of the $L_{30}$ component [$L_{30}$ component/($S_{30}$ component +$L_{30}$ component)] of 8% or higher, more preferably 10% or higher and preferably 25% or lower, more preferably 22% or lower, the two components being identified by measuring the modified polyvinyl alcohol resin by a solid echo method using pulse NMR at 30°C to give a free induction decay curve of $^1$H spin-spin relaxation and subjecting the curve to waveform separation into two curves derived from the $S_{30}$ component and the $L_{30}$ component in order of shorter to longer relaxation time. The percentage of the $L_{30}$ component [$L_{30}$ component/($S_{30}$ component + $L_{30}$ component)] is preferably 8 to 25%, more preferably 10 to 22%.

Preferably, the modified polyvinyl alcohol resin has a hard segment ($S_{80}$ component), a middle segment ($M_{80}$ component), and a soft segment ($L_{80}$ component) and has a relaxation time of the $L_{80}$ component of 0.40 ms or longer, more preferably 0.45 ms or longer and preferably 2.00 ms or shorter, more preferably 1.70 ms or shorter, the three components being identified by measuring the modified polyvinyl alcohol resin by a Hahn echo method using pulse NMR at 80°C to give a free induction decay curve of $^1$H spin-spin relaxation and subjecting the curve to waveform separation into three curves derived from the $S_{80}$ component, the $M_{80}$ component, and the $L_{80}$ component in order of shorter to longer relaxation time. The relaxation time of the $L_{80}$ component is preferably 0.40 to 2.00 ms, more preferably 0.45 to 1.70 ms.

In the modified polyvinyl alcohol resin, preferably, the product [(percentage of $L_{30}$ component) × (relaxation time of $L_{80}$ component)] of the percentage of the $L_{30}$ component and the relaxation time of the $L_{80}$ component is 6.6 or greater.

The calculated value is an index relating to the molecular mobility at the relevant temperatures. When the above expression is satisfied, the polyvinyl alcohol can have both solubility and physical properties such as a reduction in undissolved lumps at high temperature.

The product, (percentage of $L_{30}$ component) × (relaxation time of $L_{80}$ component), is preferably 6.8 or greater, more preferably 7.0 or greater and is preferably 20.0 or less, more preferably 15.0 or less, still more preferably 13.0 or less. The product, (percentage of $L_{30}$ component) × (relaxation time of $L_{80}$ component), is preferably 6.8 to 20, more preferably 7.0 to 15.0, still more preferably 7.0 to 13.0.

Herein, pulse NMR refers to an analysis involving detecting a response signal to a pulse to obtain a $^1H$ nuclear magnetic relaxation time of a sample. A free induction decay curve may be obtained as a pulse response. The free induction decay curve consists of overlapped multiple free induction decay curves derived from multiple components having different relaxation times. The relaxation times or the components thereof of the components having different relaxation times can be identified by waveform separation of the curve using the least square method. Analysis involving separation into two or three components using pulse NMR described above is a known technique. An example is the method disclosed in JP 2018-2983 A.

The S component is a component having a short relaxation time in pulse NMR measurement and refers to a hard component with low molecular mobility. The L component is a component having a long relaxation time in pulse NMR measurement and refers to a soft component with high molecular mobility. The M component has a relaxation time that is between those of the S component and the L component in the pulse NMR measurement, and thus has molecular mobility that is between those of the S component and the L component.

The percentages and the relaxation times of the S component, the M component, and the L component of the modified polyvinyl alcohol resin can be adjusted by, for example, adjusting the modifying group content, the modifying species, the acetyl group content, or the molecular weight of the modified polyvinyl alcohol.

Preferably, the modified polyvinyl alcohol resin has a main peak m in a retention time range from 12 to 25 min and a half width of the main peak m of 2.5 min or less as measured by high-performance liquid chromatography using a gradient elution method in which a mixing ratio of a solvent A and a solvent B is changed with time, and in the gradient elution method, the solvent A is a 0.1% by weight aqueous formic acid solution, the solvent B is methanol, a mobile phase flow rate is 0.8 ml/min, and the mixing ratio is linearly changed such that a proportion of the solvent A is 90% by weight at a start of measurement, maintained at 90% by weight for 10 min from the start of measurement, and reduced to 0% by weight after 20 min from the start of measurement.

The main peak m represents a peak corresponding to the polarity of the polymer. The half width of the main peak m is an index of the uniformity of the polarity of the polymer. A modified polyvinyl alcohol resin having a half width of the main peak m in the above range has particularly excellent solubility in water.

The half width of the main peak m is preferably 0.3 min or greater, more preferably 0.4 min or greater and is preferably 2.0 min or less, more preferably 1.0 min or less. The half width of the main peak m is preferably 0.3 to 2.5 min, more preferably 0.4 to 2.0 min, still more preferably 0.4 to 1.0 min.

A main peak means a peak with the highest peak intensity in the retention time from 12 to 25 min. A half width of a main peak means, as shown in FIG. 2, the peak width at 50% of the following distance: the distance to the main peak from the intersection of a straight line (baseline) connecting the starting point (time of starting waveform detection) of a waveform in the data of interest and the end point (time of ending waveform detection) of the waveform and a straight line drawn vertically from the peak top of the main peak. For example, the time of starting waveform detection is 5 min or greater in RTand is the minimum elution time (min) at which at least one five-hundredth of the maximum peak detection intensity is obtained. The time of ending waveform detection is 5 min or greater in RTand is the maximum elution time (min) at which at least one five-hundredth of the maximum peak detection intensity is obtained.

The high-performance liquid chromatography (HPLC) can be performed using, for example, Prominence available from Shimadzu Corporation, 1260 Infinity II LC system available from Agilent Technologies Japan, Ltd., or Alliance HPLC system available from Waters Corporation.

The half width of the main peak m can be adjusted by adjusting the uniformity of the polarity of the polymer (distribution of modifying group content or of hydroxy group content). Specifically, the half width can be adjusted by adjusting the amount of a saponification catalyst in saponification of a vinyl ester copolymer, the hydroxy group content, or the type or amount of the modifying group.

A peak top of the main peak m in the retention time range from 12 to 25 min preferably has a retention time of 17 min or shorter.

When the retention time of the peak top of the main peak m is 17 min or shorter, the modified polyvinyl alcohol resin can have improved solubility in highly polar solvents such as water.

The retention time of the peak top of the main peak m is preferably 12 min or longer, more preferably 15 min or longer and is more preferably 16.8 min or shorter, still more preferably 16.5 min or shorter. The retention time of the peak top of the main peak m is preferably 12 to 17 min, more preferably 15 to 16.8 min, still more preferably 15 to 16.5 min.

The retention time of the peak top of the main peak m can be adjusted by adjusting the degree of polarity of the

polymer (modifying group content and/or hydroxy group content). Specifically, the retention time can be adjusted by adjusting the amount of a saponification catalyst in saponification of a vinyl ester copolymer, the hydroxy group content, or the type or amount of the modifying group.

Preferably, the modified polyvinyl alcohol resin has a main peak n in a retention time range from 12 to 25 min and a half width of the main peak n of 0.5 min or greater as measured by high-performance liquid chromatography using a gradient elution method in which a mixing ratio of a solvent A and a solvent B is changed with time, in the gradient elution method, the solvent A is water, the solvent B is methanol, a mobile phase flow rate is 0.8 ml/min, and the mixing ratio is linearly changed such that a proportion of the solvent A is 90% by weight at a start of measurement, maintained at 90% by weight for 10 min from the start of measurement, and reduced to 0% by weight after 20 min from the start of measurement.

The half width of the main peak n is more preferably 1 min or greater and is preferably 2 min or less, more preferably 1.5 min or less. The half width of the main peak n is preferably 0.5 to 2 min, more preferably 1 to 1.5 min.

A peak top of the main peak n has a retention time of preferably 5 min or longer, more preferably 15 min or longer and preferably 25 min or shorter, more preferably 16 min or shorter. The retention time of the peak top of the main peak n is preferably 5 to 25 min, more preferably 15 to 16 min.

The retention time of the peak top of the main peak n can be adjusted by adjusting the degree of polarity of the polymer (modifying group content and/or hydroxy group content). Specifically, the retention time can be adjusted by adjusting the amount of a saponification catalyst in saponification of a vinyl ester copolymer, the hydroxy group content, or the type or amount of the modifying group.

In the modified polyvinyl alcohol resin, the main peak n preferably has a proportion of an area A to an area B [(area A/area B) $\times$ 100] of 0.5% or higher, where the area A is an area of the main peak n in a retention time range of 0.9X or less, X being the retention time of the peak top of the main peak n, and the area B is a total area of the main peak n.

As shown in FIG. 3, the area B, which is the total area of the peak, means the area of the portion surrounded by the baseline of the waveform of the data of interest and the waveform of the data of interest.

As shown in FIG. 4, the area A of the peak means the area of the portion with the smaller retention time values surrounded by the line expending vertically from the retention time 0.9X on the horizontal axis, the baseline, and the waveform of the data of interest.

The proportion is an index of the proportion of polymer molecules with high polarity. When the proportion is in the above range, the modified polyvinyl alcohol resin can have improved solubility in highly polar solvents such as water.

The proportion is preferably 0.8% or higher, more preferably 0.98% or higher and is preferably 15% or lower, more preferably 12% or lower, still more preferably 10% or lower, further preferably 8% or lower. The proportion is preferably 0.5 to 15%, more preferably 0.8 to 12%, still more preferably 0.98 to 10%, further preferably 0.98 to 8%.

The proportion of the area A to the area B can be adjusted by adjusting the degree and distribution (modifying group content and/or hydroxy group content) of the polarity of the polymer. Specifically, the proportion can be adjusted by adjusting the amount of a saponification catalyst in saponification of a vinyl ester copolymer, the hydroxy group content, or the type or amount of the modifying group.

In the modified polyvinyl alcohol resin, the proportion of the following distance relative to the height of the peak top of the main peak n is preferably 1 or higher, more preferably 5 or higher and is preferably 15 or lower, more preferably 12 or lower: the distance along the line that extends vertically from 0.9X on the horizontal axis to intersect the waveform of the data of interest.

The proportion of the height can be adjusted by adjusting the amount of a saponification catalyst in saponification of a vinyl ester copolymer, the hydroxy group content, or the type or amount of the modifying group.

The modified polyvinyl alcohol resin contains a structural unit containing a hydrophilic modifying group.

The modified polyvinyl alcohol resin has a hydrophilic modifying group content of 0.01 mol% or higher and 12 mol% or lower as measured by $^1$H-NMR.

A hydrophilic modifying group content in the above range allows the polyvinyl alcohol resin to exhibit excellent solubility.

The hydrophilic modifying group content is preferably 0.05 mol% or higher, more preferably 0.1 mol% or higher, still more preferably 0.15 mol% or higher, further preferably 0.5 mol% or higher, particularly preferably 1 mol% or higher, for example 2 mol% or higher, and is preferably 11 mol% or lower, more preferably 10 mol% or lower, still more preferably 8 mol% or lower, further preferably 5 mol% or lower, for example 3 mol% or lower. The hydrophilic modifying group content is 0.01 to 12 mol%, preferably 0.05 to 11 mol%, more preferably 0.1 to 10 mol%, still more preferably 0.15 to 8 mol%, further preferably 0.5 to 5 mol%, particularly preferably 1 to 5 mol%, for example 2 to 5 mol%.

The hydrophilic modifying group content means the proportion of the structural unit containing a hydrophilic modifying group in all the structural units constituting the modified polyvinyl alcohol resin.

The hydrophilic modifying group content can be measured by $^1$H-NMR, for example, using a measurement device AVANCE 400 (available from Bruker Biospin), for example.

Examples of the hydrophilic modifying group include a carboxy group, an amino group, an amide group, a pyrrolidone group, a sulfonic acid group, an ethylene oxide group, a polyoxyalkylene group, a phosphoric acid group, and

their derivatives (e.g., their salts and alkyl esters). Preferred among these are a carboxy group and its derivatives from the standpoint of the solubility and the Tg.

The modified polyvinyl alcohol resin preferably has the hydrophilic modifying group in a side chain. Here, the hydrophilic modifying group does not refer to a hydroxy group derived from vinyl alcohol nor an acetyl group derived from vinyl acetate.

Examples of the structural unit containing a hydrophilic modifying group include structural units derived from unsaturated fatty acids or their derivatives such as their metal salts or esters.

The unsaturated fatty acids have a carbon number of preferably 3 or greater and preferably 15 or less, more preferably 12 or less, still more preferably 10 or less, further preferably 8 or less, particularly preferably 5 or less. The carbon number is preferably 3 to 15, more preferably 3 to 12, still more preferably 3 to 10, further preferably 3 to 8, particularly preferably 3 to 5.

Examples of the unsaturated fatty acids include monocarboxylic acids having a radically polymerizable unsaturated double bond such as acrylic acid, crotonic acid, methacrylic acid, oleic acid, 3-butenoic acid, 4-pentenoic acid, 5-hexenoic acid, 6-heptenoic acid, 7-octenoic acid, 8-nonenoic acid, 9-decenoic acid, 10-undecenoic acid, and 2-methyl-3-butenoic acid and dicarboxylic acids having a radically polymerizable unsaturated double bond such as methylenemalonic acid, itaconic acid, 2-methyleneglutaric acid, 2-methyleneadipic acid, 2-methylenesebacic acid, maleic acid, fumaric acid, glutaconic acid, mesaconic acid, allylmalonic acid, and dihydromuconic acid.

Specific examples of the structural unit containing a hydrophilic modifying group include structural units represented by the following formulas (1-1) to (1-4). The structural unit containing a hydrophilic modifying group is preferably a structural unit represented by the following formula (1-1) or a structural unit represented by the following formula (1-2), more preferably a structural unit represented by the following formula (1-1).

[Chem. 1]

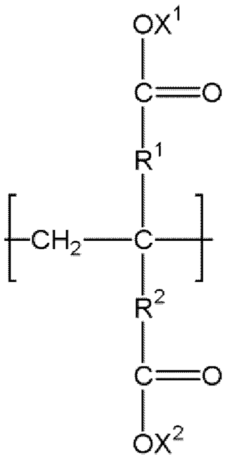
(1-1)
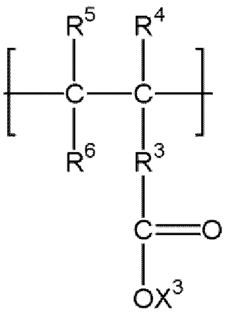
(1-2)
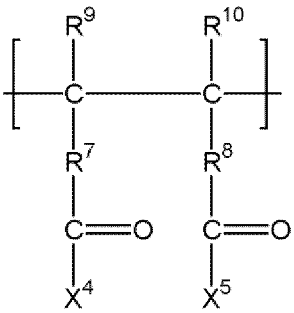
(1-3)

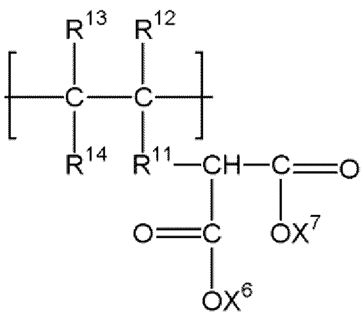
(1-4)

In the formula (1-1), $R^1$ and $R^2$ each independently represent a C0-C10 alkylene group; and $X^1$ and $X^2$ each independently represent a hydrogen atom, a metal atom, or a C1-C3 alkyl group.

In the formula (1-1), the alkylene groups represented by $R^1$ and $R^2$ each have a carbon number of preferably 0 or greater and preferably 5 or less, more preferably 3 or less. The carbon number is preferably 0 to 5, more preferably 0 to 3.

Examples of the C0-C10 alkylene group include a single bond, linear alkylene groups such as methylene,

ethylene, trimethylene, tetramethylene, pentamethylene, hexamethylene, octamethylene, and decamethylene groups, branched alkylene groups such as methylmethylene, methylethylene, 1-methylpentylene, and 1,4-dimethylbutylene groups, and cyclic alkylene groups such as cyclopropylene, cyclobutylene, and cyclohexylene groups. Preferred among these are a single bond, linear alkylene groups such as methylene, ethylene, n-propylene, and n-butylene groups. More preferred are a single bond, a methylene group, and an ethylene group.

$R^1$ and $R^2$ may be the same as or different from each other, but are preferably different from each other. Preferably, at least one of them is a single bond. More preferably, one of them is a single bond and the other is a methyl group.

When at least one of $X^1$ or $X^2$ in the formula (1-1) is a metal atom, examples of the metal atom include a sodium atom, a lithium atom, and a potassium atom. Preferred among these is a sodium atom.

In the formula (1-1), examples of the C1-C3 alkyl groups represented by $X^1$ and $X^2$ include a methyl group, an ethyl group, and a propyl group. Preferred among these is a methyl group.

$X^1$ and $X^2$ may be the same as or different from each other, but are preferably the same as each other. $X^1$ and $X^2$ are each preferably a hydrogen atom or a methyl group, more preferably a hydrogen atom.

The structural unit represented by the formula (1-1) is preferably derived from an $\alpha$-dicarboxy monomer. Examples of the $\alpha$-dicarboxy monomer include dicarboxylic acids having a radically polymerizable unsaturated double bond such as methylenemalonic acid, itaconic acid, 2-methyleneglutaric acid, 2-methyleneadipic acid, and 2-methylenesebacic acid, and their derivatives such as their metal salts and esters. From the standpoint of the reactivity in polymerization, preferred among these are itaconic acid and its derivatives, more preferred are itaconic acid and dimethyl itaconate.

The $\alpha$-dicarboxy monomer herein means a monomer having two carboxy groups on the $\alpha$ carbon.

In the formula (1-2), $R^3$ represents a C0-C12 alkylene group; $X^3$ represents a hydrogen atom, a metal atom, or a C1-C3 alkyl group; and $R^4$, $R^5$, and $R^6$ each independently represent a hydrogen atom or a C1-C10 alkyl group.

In the formula (1-2), examples of the alkylene group represented by $R^3$ include the same groups as those listed for $R^1$ and $R^2$ in the formula (1-1). Preferred among these are a single bond and linear alkylene groups such as methylene, ethylene, trimethylene, and tetramethylene groups. More preferred are a single bond, a methylene group, and an ethylene group. Still more preferred is a single bond.

In the formula (1-2), when $X^3$ is a metal atom, examples of the metal atom include the same atoms as those listed for $X^1$ and $X^2$ in the formula (1-1). Preferred among these is a sodium atom.

In the formula (1-2), when $X^3$ is a C1-C3 alkyl group, examples of the alkyl group include the same groups as those listed for the $X^1$ and $X^2$ in the formula (1-1). Preferred among these is a methyl group.

In the formula (1-2), the lower limit of the carbon number of each of the alkyl groups represented by $R^4$, $R^5$, and $R^6$ is preferably 1, and the upper limit thereof is preferably 10, more preferably 5, still more preferably 3. The carbon number is preferably 1 to 10, more preferably 1 to 5, still more preferably 1 to 3.

$R^4$, $R^5$, and $R^6$ may be the same as or different from each other, but are preferably the same as each other. $R^4$, $R^5$, and $R^6$ are each preferably a hydrogen atom.

Examples of the C1-C10 alkyl group include linear alkyl groups such as methyl, ethyl, propyl, n-butyl, n-pentyl, n-heptyl, n-octyl, n-nonyl, and n-decyl groups, branched alkyl groups such as isopropyl, isobutyl, sec-butyl, tert-butyl, isopentyl, 2,2-dimethylpropyl, 1,1,3,3-tetramethylbutyl, and 2-ethylhexyl groups, and cycloalkyl groups such as cyclopropyl, cyclopropylmethyl, cyclobutyl, cyclopentyl, and cyclohexyl groups. Preferred among these are linear alkyl groups such as methyl, ethyl, propyl, and n-butyl groups. More preferred among these are methyl and ethyl groups.

The structural unit represented by the formula (1-2) is preferably derived from a monocarboxy monomer. Examples of the monocarboxy monomer include monocarboxylic acids having a radically polymerizable unsaturated double bond such as acrylic acid, crotonic acid, methacrylic acid, 3-butenoic acid, 4-pentenoic acid, 5-hexenoic acid, 6-heptenoic acid, 7-octenoic acid, 8-nonenoic acid, 9-decenoic acid, 10-undecenoic acid, and 2-methyl-3-butenoic acid and their derivatives such as their metal salts and their esters. From the standpoint of the reactivity in polymerization, preferred among these are acrylic acid and its derivatives, and more preferred is acrylic acid.

In the formula (1-3), $R^7$ and $R^8$ each independently represent a C0-C10 alkylene group; $X^4$ and $X^5$ each independently represent a hydrogen atom, a metal atom, or a C1-C3 alkyl group; and $R^9$ and $R^{10}$ each independently represent a hydrogen atom or a C1-C5 alkyl group.

In the formula (1-3), examples of the alkylene groups represented by $R^7$ and $R^8$ include the same groups as those listed for $R^1$ and $R^2$ in the formula (1-1). Preferred among these are a single bond and linear alkylene groups such as methylene, ethylene, trimethylene, and tetramethylene groups. More preferred are a single bond, a methylene group, and an ethylene group. Still more preferred is a single bond.

When at least one of $X^4$ or $X^5$ in the formula (1-3) is a metal atom, examples of the metal atom include the same atoms as those listed for $X^1$ and $X^2$ in the formula (1-1). Preferred among these is a sodium atom.

When at least one of $X^4$ or $X^5$ in the formula (1-3) is a C1-C3 alkyl group, examples of the alkyl group include the same groups as those listed for $X^1$ and $X^2$ in the formula (1-1). Preferred among these is a methyl group.

In the formula (1-3), examples of the alkyl groups represented by $R^9$ and $R^{10}$ include the same groups as those listed for $R^4$, $R^5$, and $R^6$ in the formula (1-2).

In the formula (1-4), $R^{11}$ represents a C1-C12 alkylene group; $X^6$ and $X^7$ each represent a hydrogen atom, a metal atom, or a C1-C3 alkyl group; and $R^{12}$, $R^{13}$, and $R^{14}$ each independently represent a hydrogen atom or a C1-C10 alkyl group.

In the formula (1-4), examples of the alkylene group represented by $R^{11}$ include the same groups as those listed for $R^1$ and $R^2$ in the formula (1-1). Preferred among these are a single bond and linear alkylene groups such as methylene, ethylene, trimethylene, and tetramethylene groups. More preferred are a single bond, a methylene group, and an ethylene group. Still more preferred is a single bond.

When $X^6$ or $X^7$ in the formula (1-4) is a metal atom, examples of the metal atom include the same atoms as those listed for $X^1$ and $X^2$ in the formula (1-1). Preferred among these is a sodium atom.

When $X^6$ or $X^7$ in the formula (1-4) is a C1-C3 alkyl group, examples of the alkyl group include the same groups as those listed for $X^1$ and $X^2$ in the formula (1-1). Preferred among these is a methyl group.

In the formula (1-4), examples of the alkyl groups represented by $R^{12}$, $R^{13}$, and $R^{14}$ include the same groups as those listed for $R^4$, $R^5$, and $R^6$ in the formula (1-2).

From the standpoint of the solubility in water and film strength, the modified polyvinyl alcohol resin has an acetyl group content of preferably 0.01 mol% or higher, more preferably 0.1 mol% or higher and preferably 30 mol% or lower, more preferably 25 mol% or lower, still more preferably 20 mol% or lower, further preferably 15 mol% or lower, particularly preferably 10 mol% or lower, especially preferably 5 mol% or lower, even further preferably 2 mol% or lower, for example 1 mol% or lower, as measured by $^1$H-NMR. The acetyl group content is preferably 0.01 to 30 mol%, more preferably 0.1 to 25 mol%, still more preferably 0.1 to 20 mol%, further preferably 0.1 to 15 mol%, particularly preferably 0.1 to 10 mol%, especially preferably 0.1 to 5 mol%, even further preferably 0.1 to 2 mol%, for example 0.1 to 1 mol%.

The acetyl group content represents the proportion of the acetyl group-containing structural unit represented by the formula (2) in all the structural units constituting the modified polyvinyl alcohol resin.

The acetyl group content can be measured in the same manner as the hydrophilic modifying group.

[Chem. 2]

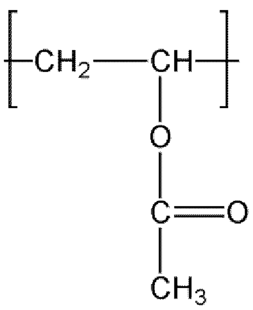

(2)

The modified polyvinyl alcohol resin has a hydroxy group content of 70 mol% or higher as measured by $^1$H-NMR.

A hydroxy group content in the above range can lead to sufficiently high solubility of the resin in water. In contrast, a hydroxy group content outside the above range can lead to a significantly low solubility of the resin in water.

The hydroxy group content is preferably 85 mol% or higher, more preferably 88 mol% or higher, still more preferably 90 mol% or higher, further preferably 95 mol% or higher and is preferably 99.5 mol% or lower, more preferably 99 mol% or lower, still more preferably 98.5 mol% or lower. The hydroxy group content is preferably 70 to 99.5 mol%, more preferably 85 to 99 mol%, still more preferably 90 to 98.5 mol%, further preferably 95 to 98.5 mol%.

A hydroxy group content in the above range allows the modified polyvinyl alcohol resin to achieve both a reduction of undissolved lumps and solubility in water.

The acetyl group content represents the proportion of the hydroxy group-containing structural unit represented by the formula (3) in all the structural units constituting the modified polyvinyl alcohol resin.

The hydroxy group content can be measured in the same manner as the hydrophilic modifying group.

[Chem. 3]

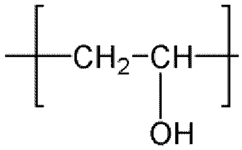

(3)

The modified polyvinyl alcohol resin preferably does not contain any ethylene unit represented by the following formula (4). A modified polyvinyl alcohol resin containing the ethylene unit may have higher hydrophobicity and thus lower solubility in water.

[Chem. 4]

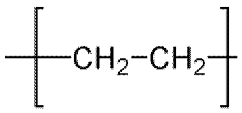

(4)

The modified polyvinyl alcohol resin has a viscosity average degree of polymerization of preferably 200 or higher, more preferably 300 or higher, still more preferably 500 or higher, further preferably 600 or higher, particularly preferably 700 or higher, for example 800 or higher and preferably 5,000 or lower, more preferably 3,500 or lower, still more preferably 3,000 or lower, further preferably 2,500 or lower, particularly preferably 2,000 or lower, especially preferably 1,900 or lower, for example 1,800 or lower. The viscosity average degree of polymerization is preferably 200 to 5,000, more preferably 300 to 3,500, still more preferably 500 to 3,000, further preferably 600 to 2,500, particularly preferably 700 to 2,000, especially preferably 800 to 1,900, for example 800 to 1,800.

A viscosity average degree of polymerization in the above range can lead to better solubility and better film strength, for example.

The viscosity average degree of polymerization can be determined by measuring the viscosity of an aqueous solution of the resin at a concentration of 4% by weight by a method in conformity with JIS K6726-1994 "Testing methods for polyvinyl alcohol".

The modified polyvinyl alcohol resin may be produced by, for example, copolymerizing a vinyl ester and other unsaturated monomers to give a vinyl ester copolymer and adding a saponification catalyst to saponify, in other words, hydrolyze, the vinyl ester copolymer.

In particular, adjusting the amount of the saponification catalyst, the hydroxy group content, or the type or amount of the modifying group allows the resulting modified polyvinyl alcohol resin to have the predetermined properties described above.

In particular, increasing the amount of the catalyst in saponification allows the modified polyvinyl alcohol resin to have a predetermined Tg and a predetermined degree of crystallinity.

Any vinyl ester may be used. Examples include vinyl formate, vinyl acetate, vinyl propionate, and vinyl pivalate. Preferred among these is vinyl acetate.

Examples of other unsaturated monomers include monomers other than vinyl esters and having a carbon-carbon double bond such as a vinyl group. Examples include: unsaturated acids such as monocarboxylic acids having a radically polymerizable unsaturated double bond and dicarboxylic acids having a radically polymerizable unsaturated double bond, and their derivatives such as their salts and their esters; olefins; (meth)acrylamides; N-vinylamides; vinyl ethers; nitriles; vinyl halides; allyl compounds; vinyl silyl compounds; sulfonic acid group-containing compounds; and amino group-containing compounds. Preferred among these are unsaturated acids, their salts, and their esters.

Examples of the monocarboxylic acids having a radically polymerizable unsaturated double bond include acrylic acid, crotonic acid, methacrylic acid, and oleic acid.

Examples of the dicarboxylic acids having a radically polymerizable unsaturated double bond include methylenemalonic acid, itaconic acid, 2-methyleneglutaric acid, 2-methyleneadipic acid, and 2-methylenesebacic acid.

Examples of the olefins include ethylene, propylene, 1-butene, and isobutene.

Examples of the (meth)acrylamides include acrylamide, n-methylacrylamide, N-ethylacrylamide, and N,N-dimethylacrylamide.

Examples of the N-vinylamides include N-vinylpyrrolidone.

Examples of the vinyl ethers include methyl vinyl ether, ethyl vinyl ether, n-propyl vinyl ether, i-propyl vinyl ether, and n-butyl vinyl ether.

Examples of the nitriles include (meth)acrylonitrile.

Examples of the vinyl halides include vinyl chloride and vinylidene chloride.

Examples of the allyl compounds include allyl acetate and allyl chloride.

Examples of the vinyl silyl compounds include vinyltrimethoxysilane.

Examples of the sulfonic acid group-containing compounds include: (meth)acrylamido alkane sulfonic acids such as (meth)acrylamidopropanesulfonic acid and their salts; and olefin sulfonic acids such as ethylenesulfonic acid, allylsulfonic acid, and methallylsulfonic acid and their salts.

Examples of the amino group-containing compounds include allylamine, polyoxyethyleneallylamine, polyoxypropyleneallylamine, polyoxyethylenevinylamine, and polyoxypropylenevinylamine.

Preferred among these are acrylic acid, itaconic acid, and their derivatives.

The polymerization may be performed by any method, such as solution polymerization, bulk polymerization, or suspension polymerization.

Examples of the polymerization catalyst used in the polymerization include 2-ethylhexyl peroxydicarbonate ("Trigonox EHP" available from Tianjin McEIT Co., Ltd.), 2,2'-azobisisobutyronitrile (AIBN), t-butyl peroxyneodecanoate, bis(4-t-butylcyclohexyl) peroxydicarbonate, di-n-propyl peroxydicarbonate, di-n-butyl peroxydicarbonate, di-cetyl peroxydicarbonate, and di-s-butyl peroxydicarbonate. The polymerization catalysts may be used alone or in combination of two or more thereof.

Examples of commercially available polymerization catalysts include Kayacarbon EH-C70 and Trigonox EHP-70 (both available from Kayaku Akzo Co., Ltd.).

The amount of the polymerization catalyst to be added is not limited. The amount is preferably 0.005 parts by weight or more and is preferably 1 part by weight or less relative to 100 parts by weight of the raw material monomers.

The polymerization catalyst may be added by any method. It may be added all at once at an early stage of the polymerization reaction, or part of it may be added at an early stage of the polymerization reaction and the rest may be added in the course of the polymerization reaction.

The reaction temperature in the polymerization is not limited. The reaction temperature is preferably 40°C or higher and is preferably 100°C or lower.

The reaction time in the polymerization is not limited. The reaction time is preferably 1 h or longer and preferably 12 h or shorter.

Examples of the saponification catalyst used in saponification include alkali catalysts such as sodium hydroxide, potassium hydroxide, sodium alcoholate, and sodium carbonate, and acid catalysts such as sulfuric acid, phosphoric acid, and hydrochloric acid. Alkali catalysts are preferred because they can increase the saponification rate to improve the productivity. Sodium hydroxide is particularly preferred.

The amount of the saponification catalyst to be added is preferably 1.4 parts by weight or more, more preferably 2.0 parts by weight or more and is preferably 30 parts by weight or less, more preferably 25 parts by weight or less, relative to 100 parts by weight of the vinyl ester copolymer.

The saponification catalyst is preferably added to the vinyl ester copolymer in such an amount that the caustic molar ratio (CMR, the molar ratio between the base and the acetyl groups on PVAc) is preferably 0.01 or higher, more preferably 0.035 or higher and is preferably 0.8 or lower, more preferably 0.6 or lower relative to the vinyl ester copolymer.

The saponification catalyst may be added by any method. It may be added all at once at an early stage of the saponification reaction, or part of it may be added at an early stage of the saponification reaction and the rest may be added in the course of the saponification reaction.

The reaction temperature in the saponification is preferably 15°C or higher, more preferably 20°C or higher and is preferably 80°C or lower, more preferably 60°C or lower.

The reaction time in the saponification is preferably 0.4 h or longer, more preferably 0.5 h or longer and is preferably 5 h or shorter, more preferably 4 h or shorter.

If necessary, residual saponification catalyst may be neutralized after saponification. The neutralization may be performed using a neutralizing agent, for example, an organic acid such as acetic acid or lactic acid.

The modified polyvinyl alcohol resin has excellent solubility and can be suitably used, for example, in the form of a PVA film as a packaging material for packing various substances such as agrochemicals, medicines, dyes, detergents, fertilizers, cosmetics, and sanitary goods. Moreover, the modified polyvinyl alcohol resin can also be suitably used in applications such as viscosity adjusters of aqueous solutions, gas barrier coating agents, suspending agents, emulsifying agents, polarizing plates, water-soluble films, dispersants, and raw materials of various resins (e.g., polyvinyl acetal resins).

The PVA film may be produced by, for example, preparing an aqueous solution of the modified polyvinyl alcohol resin, casting the obtained aqueous solution, followed by drying. Specific examples of the production method include casting, roll coating, spin coating, screen coating, dipping, and spraying.

- Advantageous Effects of Invention

The present invention can provide a modified polyvinyl alcohol resin having excellent solubility and less likely to

form undissolved lumps when dissolved.

BRIEF DESCRIPTION OF DRAWINGS

FIG. 1 is a schematic view of a DSC curve.
FIG. 2 is a schematic view of HPLC measurement results.
FIG. 3 is a schematic view of HPLC measurement results.
FIG. 4 is a schematic view of HPLC measurement results.

DESCRIPTION OF EMBODIMENTS

The present invention will be described in more detail with reference to examples below, but the present invention is not limited only to these examples.

(Example 1)

(Production of polyvinyl acetate resin (PVAc))

A 5-L separable flask equipped with a stirring device, a condenser, a thermometer, a water bath, and a nitrogen gas inlet was provided. To the flask were charged 181 parts by weight of methanol and 453 parts by weight of vinyl acetate (VAM) and 1.7 parts by weight of dimethyl itaconate (DMI) as monomers. The contents were stirred with an impeller at 150 rpm to disperse the monomers in methanol, whereby a monomer mixed solution was obtained.

The resulting monomer mixed solution was bubbled using nitrogen gas for 30 min to remove dissolved oxygen. The separable flask system was then purged with nitrogen gas, and the temperature was raised with stirring until the mixed solution reached 65°C. Separately, 0.52 parts by weight of Kayacarbon EH-C70 (available from Kayaku Akzo Co., Ltd., di-2-ethylhexyl peroxydicarbonate) as a polymerization catalyst was dissolved in 31 parts by weight of methanol to give a polymerization catalyst solution. Separately, 523 parts by weight of VAM and 9.9 parts by weight of DMI were mixed to give a monomer mixed solution for later addition. The polymerization catalyst solution and the monomer mixed solution for later addition were added to the monomer mixed solution over 3 h using a drip pump. Further, the polymerization was continued for 1 h. Thereafter, methanol was added to terminate the polymerization. After cooling to room temperature, a solution containing a modified polyvinyl acetate resin (PVAc) was obtained.

(Production of polyvinyl alcohol resin (PVA))

The obtained PVAc was added to methanol as a solvent at a concentration of 35% by weight to give a PVAc solution. To the PVAc solution was added sodium hydroxide as a saponification catalyst at a caustic molar ratio (CMR, the molar ratio between the base and the acetyl groups on PVAc) of 0.07. The PVAc solution was held at 40°C for 45 min for saponification. The solidified polymer was pulverized with a pulverizer, washed with methanol, and dried in an oven to give powder of a polyvinyl alcohol resin containing a modifying group-containing structural unit represented by the formula (1-1) (wherein $R^1$ is a single bond, $R^2$ is a methylene group, and $X^1$ and $X^2$ are hydrogen atoms).

(Example 2)

In "(Production of polyvinyl acetate resin (PVAc))", an aqueous solution containing a PVAc was obtained as in Example 1 except for the following changes: 183 parts by weight of methanol was mixed with 368 parts by weight of VAM and 1.1 parts by weight of itaconic acid (ITA) as monomers to give a monomer mixed solution; 7.0 parts by weight of Kayacarbon EH-C70 as a polymerization catalyst was dissolved in 192 parts by weight of methanol to give a polymerization catalyst solution; and 552 parts by weight of VAM and 54.0 parts by weight of ITA were dissolved in 150 parts by weight of methanol to give a monomer mixed solution for later addition.

In "(Production of polyvinyl alcohol resin (PVA))", powder of a polyvinyl alcohol resin containing a modifying group-containing structural unit represented by the formula (1-1) (wherein $R^1$ is a single bond, $R^2$ is a methylene group, and $X^1$ and $X^2$ are hydrogen atoms) was obtained as in Example 1 except for the following changes: a PVAc solution was prepared at a concentration of 15% by weight, and to 100 parts by weight of the PVAc solution was added a 10% by weight sodium hydroxide aqueous solution as a saponification catalyst at a CMR of 0.13.

(Example 3)

In "(Production of polyvinyl acetate resin (PVAc))", an aqueous solution containing a PVAc was obtained as in Example 1 except for the following changes: 177 parts by weight of methanol was mixed with 360 parts by weight of VAM and 3.0 parts by weight of methyl acrylate (MA) as monomers to give a monomer mixed solution; and 540 parts by weight of VAM and 71.0 parts by weight of MA were dissolved in 156 parts by weight of methanol to give a monomer mixed solution for later addition.

In "(Production of polyvinyl alcohol resin (PVA))", powder of a polyvinyl alcohol resin containing a modifying group-containing structural unit represented by the formula (1-2) (wherein $R^3$ is a single bond, $R^4$, $R^5$, and $R^6$ are hydrogen atoms, and $X^3$ is a hydrogen atom) was obtained as in Example 1 except for the following changes: a PVAc solution was prepared at a concentration of 15% by weight, and to 250 parts by weight of the PVAc solution was added a 20% by weight sodium hydroxide solution (solution in water/methanol (weight ratio 1:1) as a saponification catalyst at a CMR of 0.05.

(Example 4)

In "(Production of polyvinyl acetate resin (PVAc))", an aqueous solution containing a PVAc was obtained as in Example 1 except for the following changes: 183 parts by weight of methanol was mixed with 376 parts by weight of VAM and 0.7 parts by weight of itaconic acid (ITA) as monomers to give a monomer mixed solution; 7.0 parts by weight of Kayacarbon EH-C70 as a polymerization catalyst was dissolved in 192 parts by weight of methanol to give a polymerization catalyst solution; and 564 parts by weight of VAM and 34.0 parts by weight of ITA were dissolved in 150 parts by weight of methanol to give a monomer mixed solution for later addition.

In "(Production of polyvinyl alcohol resin (PVA))", powder of a polyvinyl alcohol resin containing a modifying group-containing structural unit represented by the formula (1-1) (wherein $R^1$ is a single bond, $R^2$ is a methylene group, and $X^1$ and $X^2$ are hydrogen atoms) was obtained as in Example 1 except for the following changes: a PVAc solution was prepared at a concentration of 20% by weight, and to 50 parts by weight of the PVAc solution was added a 10% by weight sodium hydroxide aqueous solution as a saponification catalyst at a CMR of 0.10.

(Example 5)

In "(Production of polyvinyl acetate resin (PVAc))", an aqueous solution containing a PVAc was obtained as in Example 1 except for the following changes: 182 parts by weight of methanol was mixed with 445 parts by weight of VAM and 0.4 parts by weight of itaconic acid (ITA) as monomers to give a monomer mixed solution; 1.6 parts by weight of Kayacarbon EH-C70 as a polymerization catalyst was dissolved in 44 parts by weight of methanol to give a polymerization catalyst solution; and 668 parts by weight of VAM and 11.2 parts by weight of ITA were dissolved in 149 parts by weight of methanol to give a monomer mixed solution for later addition.

In "(Production of polyvinyl alcohol resin (PVA))", powder of a polyvinyl alcohol resin containing a modifying group-containing structural unit represented by the formula (1-1) (wherein $R^1$ is a single bond, $R^2$ is a methylene group, and $X^1$ and $X^2$ are hydrogen atoms) was obtained as in Example 1 except for the following changes: a PVAc solution was prepared at a concentration of 20% by weight, and to 120 parts by weight of the PVAc solution was added a 10% by weight sodium hydroxide aqueous solution as a saponification catalyst at a CMR of 0.3.

(Example 6)

In "(Production of polyvinyl acetate resin (PVAc))", an aqueous solution containing a PVAc was obtained as in Example 1 except for the following changes: 182 parts by weight of methanol was mixed with 438 parts by weight of VAM and 0.6 parts by weight of itaconic acid (ITA) as monomers to give a monomer mixed solution; 1.6 parts by weight of Kayacarbon EH-C70 as a polymerization catalyst was dissolved in 44 parts by weight of methanol to give a polymerization catalyst solution; and 658 parts by weight of VAM and 28.2 parts by weight of ITA were dissolved in 149 parts by weight of methanol to give a monomer mixed solution for later addition.

In "(Production of polyvinyl alcohol resin (PVA))", powder of a polyvinyl alcohol resin containing a modifying group-containing structural unit represented by the formula (1-1) (wherein $R^1$ is a single bond, $R^2$ is a methylene group, and $X^1$ and $X^2$ are hydrogen atoms) was obtained as in Example 1 except for the following changes: a PVAc solution was prepared at a concentration of 20% by weight, and to 250 parts by weight of the PVAc solution was added a 10% by weight sodium hydroxide aqueous solution as a saponification catalyst at a CMR of 0.18.

(Example 7)

Powder of a polyvinyl alcohol resin containing a modifying group-containing structural unit represented by the

formula (1-1) (wherein $R^1$ is a single bond, $R^2$ is a methylene group, and $X^1$ and $X^2$ are hydrogen atoms) was obtained as in Example 1 except for the following changes: in "(Production of polyvinyl acetate resin (PVAc))", 160 parts by weight of methanol was mixed with 384.28 parts by weight of VAM and 0.19 parts by weight of itaconic acid (ITA) as monomers to give a monomer mixed solution, and 575 parts by weight of VAM and 9.1 parts by weight of ITA were dissolved in 95 parts by weight of methanol to give a monomer mixed solution for later addition.

(Comparative Example 1)

In "(Production of polyvinyl acetate resin (PVAc))", a solution containing a PVAc was obtained as in Example 1 except for the following changes: 240 parts by weight of methanol was mixed with 377 parts by weight of VAM as a monomer to give a monomer mixed solution; 0.15 parts by weight of Kayacarbon EH-C70 as a polymerization catalyst was dissolved in 18.9 parts by weight of methanol to give a polymerization catalyst solution; instead of the monomer mixed solution for later addition, 716 parts by weight of VAM was used; the polymerization catalyst solution and the VAM were added to the monomer mixed solution over 4 h; and the polymerization was then continued for 1.5 h.

In "(Production of polyvinyl alcohol resin (PVA))", powder of a polyvinyl alcohol resin was obtained as in Example 1 except for the following change: sodium hydroxide was added as a saponification catalyst at a CMR of 0.02.

(Comparative Example 2)

JP-18 (available from Japan Vam & Poval Co., Ltd.), a partially saponified polyvinyl alcohol, was used.

(Comparative Example 3)

KL-118 (available from Kuraray Co., Ltd.), an itaconic acid-modified PVA, was used.

(Comparative Example 4)

In "(Production of polyvinyl acetate resin (PVAc))", a solution containing PVAc was obtained as in Example 1 except for the following changes: 240 parts by weight of methanol was mixed with 377 parts by weight of VAM as a monomer to give a monomer mixed solution; 0.15 parts by weight of a polymerization catalyst was dissolved in 18.9 parts by weight of methanol to give a polymerization catalyst solution; instead of the monomer mixed solution for later addition, 716 parts by weight of VAM was used; the polymerization catalyst solution and VAM were added to the monomer mixed solution over 4 h; and the polymerization was then continued for 1.5 h.

In "(Production of polyvinyl alcohol resin (PVA))", powder of a polyvinyl alcohol resin was obtained as in Example 1 except for the following change: sodium hydroxide was added as a saponification catalyst at a CMR of 0.022.

(Comparative Example 5)

In "(Production of polyvinyl acetate resin (PVAc))", a solution containing PVAc was obtained as in Example 1 except for the following changes: 181 parts by weight of methanol was mixed with 384.28 parts by weight of VAM and 0.19 parts by weight of itaconic acid (ITA) as monomers to give a monomer mixed solution; and 575 parts by weight of VAM and 9.1 parts by weight of ITA were dissolved in 95 parts by weight of methanol to give a monomer mixed solution for later addition.

In "(Production of polyvinyl alcohol resin (PVA))", powder of a polyvinyl alcohol resin containing a modifying group-containing structural unit represented by the formula (1-1) (wherein $R^1$ is a single bond, $R^2$ is a methylene group, and $X^1$ and $X^2$ are hydrogen atoms) was obtained as in Example 1 except for the following change: sodium hydroxide was added as a saponification catalyst at a CMR of 0.03.

(Evaluation)

The obtained polyvinyl alcohol resins were each evaluated as follows. Table 1 shows the results.

(1) Hydroxy group content, acetyl group content, and hydrophilic modifying group content

The obtained polyvinyl alcohol resin was dissolved in deuterium oxide at a concentration of 1% by weight, and the solution was used to measure the hydroxy group content, the acetyl group content, and the hydrophilic modifying group content by $^1H$-NMR.

(2) Viscosity average degree of polymerization

A 4% by weight aqueous solution of the obtained polyvinyl alcohol resin was prepared and used to measure the viscosity average degree of polymerization by a method in conformity with JIS K6726-1994.

(3) DSC

The obtained modified polyvinyl alcohol resin was subjected to differential scanning calorimetry using a thermal analyzer (available from Hitachi High-Tech Science Corporation, "DSC7000X") in a nitrogen atmosphere under the following measurement conditions.

<Measurement conditions>

0°C (holding for 5 min) → (first heating at heating rate of 10°C/min) → 250°C → (cooling at cooling rate of 10°C/min) → 0°C (holding for 5 min) → (second heating at heating rate of 10°C/min) → 250°C

The glass transition temperature (Tg) was calculated by a method in conformity with JIS K7121-1987.

The heat of fusion in the second heating was measured to determine the degree of crystallinity. The heat of fusion was calculated from the area of a peak appearing between 130°C and 250°C in the second heating. As shown in FIG. 1, the area of the peak was determined as the area of the region surrounded by the straight line connecting the points A and B and the DSC curve. The point A was the point at which the DSC curve separates from a straight line drawn along the linear approximation portion of the DSC curve from 170°C toward the higher temperature side. The point B was the point on the DSC curve that shows the end-of-melt temperature. The degree of crystallinity was calculated assuming that the heat of fusion of a polyvinyl alcohol resin having a degree of crystallinity of 100% was 156 J/g.

(4) Pulse NMR

The powders of the polyvinyl alcohol resins obtained in Examples 1 to 6 and Comparative Examples 1 to 3 were left to stand for 48 h at a temperature of 25°C and a humidity of 50%, and each powder (600 mg) was placed in a glass sample tube having a diameter of 10 mm (available from BRUKER, Product No. 1824511, 10 mm in diameter, 180 mm in length, flat bottom) so as to fall within the measurement range of a pulse NMR apparatus. The sample tube was set in the pulse NMR apparatus (available from BRUKER, "the minispec mq20"), held at 30°C for 10 min, and then subjected to measurement by the solid echo method under the conditions below. Thus, a free induction decay curve of $^1H$ spin-spin relaxation was obtained. After the measurement, the sample tube was held at 50°C for 30 min, then held at 80°C for 10 min, and subjected to measurement by the Hahn echo method under the conditions below. Thus, a free induction decay curve of $^1H$ spin-spin relaxation was obtained.

<Solid echo method>

Scans: 64 times
Recycle Delay: 0.4 s
Acquisition Scale: 1 ms
<Hahn echo method>
Scans: 16 times
Recycle Delay: 0.4 s
Dummy Shots: 4
First 90-180 Pulse Separation: 0.0082
Final Pulse Separation: 50
Number of Data Points for Fitting: 100

The above measurement conditions are illustrative. "Scans" and "Final Pulse Separation" are preferably set such that the intensity of the normalized relaxation curve is 0.02 ms or lower, and the "Recycle Delay" is preferably five times the longitudinal relaxation time T1.

The free induction decay curve obtained by the solid echo method was subjected to waveform separation into two curves derived from the S component and the L component. The free induction decay curve obtained by the Hahn echo method was subjected to waveform separation into three curves derived from the S component, the M component, and the

L component. The waveform separation was performed by fitting using an Abragamian model, a Gaussian model, and an exponential model. The percentages of the components were determined from the curves derived from the two or three components obtained in the measurements.

The fitting was performed using analysis software "TD-NMRA (Version 4.3, Rev. 0.8)", available from BRUKER, in conformity with the product manual. For the solid echo method, an Abragamian model fitting was applied to the S component, and an exponential model fitting was applied to the L component. For the Hahn echo method, a Gaussian model fitting was applied to the S component, and an exponential model fitting was applied to the M component and L component. In the analysis by the solid echo method, the fitting was performed using the points to 0.5 ms on the relaxation curve.

The fitting for the solid echo method was performed using the following expression (a). The fitting for the Hahn echo method was performed using the following expression (b).

[Math. 1]

$$Y = A1 \times exp(-\frac{1}{2} \times \left(\frac{t}{T_{2A}}\right)^2) \times \frac{\sin \omega t}{\omega t} + C1 \times \exp(-\frac{1}{w3} \times \left(\frac{t}{T_{2C}}\right)^{w3}) \quad (a)$$

$$Y = A1 \times exp(-\frac{1}{w1} \times \left(\frac{t}{T_{2A}}\right)^{w1}) + B1 \times \exp(-\frac{1}{w2} \times \left(\frac{t}{T_{2B}}\right)^{w2}) + C1 \times \exp(-\frac{1}{w3} \times \left(\frac{t}{T_{2C}}\right)^{w3}) \quad (b)$$

In the expressions, w1 to w3 are Weibull moduli; w1 is 2, and w2 and w3 are 1. A1 represents the percentage of the S component, B1 represents the percentage of the M component, C1 represents the percentage of the L component, $T_{2A}$ represents the relaxation time of the S component, $T_{2B}$ represents the relaxation time of the M component, $T_{2C}$ represents the relaxation time of the L component, and t represents time.

(5) High-performance liquid chromatography (HPLC)

The polyvinyl alcohol resins obtained in Example 1 and Comparative Example 3 were dissolved in water at 95°C. HPLC was performed under the conditions below by a gradient elution method in which the mixing ratio of the solvent A and the solvent B is changed with time, to measure the retention time of a main peak m and the half width of the main peak m.

The mixing ratio was linearly changed such that the proportion of the solvent A was 90% by weight at the start of measurement, maintained at 90% by weight for 10 min from the start of measurement, and reduced to 0% by weight after 20 min from the start of measurement.

Device: Prominence (available from Shimadzu Corporation)
Column: TSKgel ODS-80TM 5 um 4.6 × 150 mm
Column temperature: 40°C
Sample concentration: 0.2% by weight
Injection volume: 20 μl
Mobile phase:

solvent A 0.1% by weight aqueous formic acid solution
solvent B methanol

Flow rate: 0.8 ml/min
Detector: ELSD (35°C)

The obtained data was analyzed under the conditions below using "LabSolutions LC (ver. 5.71 SP1)" available from Shimadzu Corporation.

Width: 50 s
Slope: 200 um
Drift: 0 μV/min
T.DBL: 1,000 min
Minimum area/height: 10,000 counts

For the polyvinyl alcohol resins obtained in Example 1 and Comparative Examples 3 and 4, a main peak n was similarly measured using water as the solvent A, and the proportion of an area A to an area B [(area A/area B) × 100] was measured, where the area A is the area of the main peak n in the retention time range of 0.9X or less, X being the retention

time of the main peak n, and the area B is the total area of the main peak n.

(6) Solubility

A container with a capacity of 50 ml was charged with 24 g of water, and the water was stirred in a water bath at 70°C. After the water reached 70°C, 1.0 g (initial weight) of the powder of the obtained polyvinyl alcohol resin that had been passed through a sieve (opening: 1 mm) was added to water with stirring and stirred for 5 min. The solution was then passed through a bras mesh (mesh count: 200, thread diameter: 50 um) for filtration. The filtrate from which undissolved matter was removed was dried in an oven. The solid content was calculated, and the weight of the dissolved PVA was calculated. The dissolution percentage [(weight of dissolved PVA/initial weight of PVA) × 100] (%) was further calculated and evaluated based on the following criteria.

∞ (Excellent): Dissolution percentage of 93% or higher.
o (Good): Dissolution percentage of 91% or higher and lower than 93%.
× (Poor): Dissolution percentage of lower than 91%.

(7) Undissolved lump test

A No. 7 sample vial with a stirrer bar therein was charged with 18 g of water. The water was heated for 30 min with a hot stirrer at 60°C. With stirring at 150 rpm, 1.0 g of the powder of the polyvinyl alcohol resin was added all at once. The state of the solution was visually checked immediately after the addition and evaluated based on the following criteria.

∞ (Excellent): No undissolved lump formed.
× (Poor): Undissolved lump(s) formed.

[Table 1]

| | | | | Example | | | | | | | Comparative Example | | | | |
|---|---|---|---|---|---|---|---|---|---|---|---|---|---|---|---|
| | | | | 1 | 2 | 3 | 4 | 5 | 6 | 7 | 1 | 2 | 3 | 4 | 5 |
| Composition | Hydroxy group content | | mol% | 98.3 | 90.9 | 89.4 | 94.1 | 92.6 | 97.1 | 98.0 | 98.9 | 87.8 | 96.3 | 99.4 | 96.0 |
| | Acetyl group content | | mol% | 0.2 | 5.6 | 1.3 | 3.1 | 6.2 | 0.5 | 0.8 | 1.1 | 12.2 | 2.4 | 0.6 | 2.8 |
| | Hydrophilic modifying group content | | mol% | 1.5 | 3.5 | 9.3 | 2.8 | 1.2 | 2.4 | 1.2 | - | - | 1.3 | - | 1.2 |
| | Modifying species | | | DMI | ITA | MA | ITA | ITA | ITA | ITA | - | - | ITA | - | ITA |
| | Viscosity average degree of polymerization | | | 1800 | 1000 | 800 | 800 | 780 | 1500 | 1700 | 1500 | 1810 | 1700 | 1700 | 1700 |
| DSC | Tg | | °C | 85.7 | 88.3 | 80.4 | 86.8 | 77.7 | 106.0 | 88.8 | 86.7 | 70.7 | 80.4 | 76.9 | 80.8 |
| | Degree of crystallinity | | % | 14.3 | 8.8 | 12.6 | 6.3 | 19.4 | 0.0 | 9.8 | 46.7 | 12.9 | 25.4 | 34.8 | 24.7 |
| Pulse NMR | 30°C Solid echo method | Percentage of L30 component (A) | % | 10.9 | 19.6 | 8.2 | 17.7 | 13.2 | 13.7 | - | 8.2 | 7.9 | 12.3 | - | - |
| | 80°C Hahn echo method | Relaxation time of L80 component (B) | ms | 0.7 | 0.5 | 1.4 | 0.5 | 0.8 | 0.9 | - | 0.3 | 0.6 | 0.5 | - | - |
| | A × B | | | 7.3 | 10.3 | 11.2 | 8.7 | 10.8 | 12.5 | - | 2.2 | 4.5 | 6.5 | - | - |
| HPLC | Mobile phase: 0.1% by weight aqueous formic acid solution + methanol | Half width | min | 0.44 | - | - | - | - | - | - | - | - | 2.6 | - | - |
| | | Retention time | min | 16 | - | - | - | - | - | - | - | - | 18.2 | - | - |
| | Mobile phase: water + methanol | Area proportion [(area A/area B) × 100] | % | 7.22 | - | - | - | - | - | - | - | - | 0.1 | 0.007 | - |
| Solubility | % | | | 93.6 | 92.5 | 94.5 | 93.4 | 95.1 | 94.1 | 94.3 | 88.4 | 94.7 | 87.5 | 90.6 | 89.1 |
| | Evaluation | | | ○○ | ○ | ○○ | ○○ | ○○ | ○○ | OO | × | OO | × | × | × |

(continued)

| | | Example | | | | | | | Comparative Example | | | | |
|---|---|---|---|---|---|---|---|---|---|---|---|---|---|
| | | 1 | 2 | 3 | 4 | 5 | 6 | 7 | 1 | 2 | 3 | 4 | 5 |
| Undissolved lump test | Evaluation | ○○ | ○○ | ○○ | ○○ | ○ | ○○ | ○○ | OO | × | ○○ | ○○ | ○○ |

INDUSTRIAL APPLICABILITY

The present invention can provide a modified polyvinyl alcohol resin having excellent solubility and less likely to form undissolved lumps when dissolved.

## Claims

1. A modified polyvinyl alcohol resin comprising a structural unit containing a hydrophilic modifying group,

   the modified polyvinyl alcohol resin having
   a glass transition temperature (Tg) of 70°C or higher and a degree of crystallinity of 24% or lower as measured by DSC, and
   a hydroxy group content of 70 mol% or higher and a hydrophilic modifying group content of 0.01 mol% or higher and 12 mol% or lower as measured by $^1$H-NMR.

2. The modified polyvinyl alcohol resin according to claim 1,

   wherein the modified polyvinyl alcohol resin has a hard segment ($S_{30}$ component) and a soft segment ($L_{30}$ component), the two components being identified by measuring the modified polyvinyl alcohol resin by a solid echo method using pulse NMR at 30°C to give a free induction decay curve of $^1$H spin-spin relaxation and subjecting the curve to waveform separation into two curves derived from the $S_{30}$ component and the $L_{30}$ component in order of shorter to longer relaxation time, and has a hard segment ($S_{80}$ component), a middle segment ($M_{80}$ component), and a soft segment ($L_{80}$ component), the three components being identified by measuring the modified polyvinyl alcohol resin by a Hahn echo method using pulse NMR at 80°C to give a free induction decay curve of $^1$H spin-spin relaxation and subjecting the curve to waveform separation into three curves derived from the $S_{80}$ component, the $M_{80}$ component, and the $L_{80}$ component in order of shorter to longer relaxation time, and
   a percentage of the $L_{30}$ component [$L_{30}$ component/ ($S_{30}$ component + $L_{30}$ component)] multiplied by the relaxation time of the $L_{80}$ component gives a product [(percentage of $L_{30}$ component) × (relaxation time of $L_{80}$ component)] of 6.6 or greater.

3. The modified polyvinyl alcohol resin according to claim 1 or 2,
   wherein the hydrophilic modifying group is a carboxy group or its derivative.

4. The modified polyvinyl alcohol resin according to any one of claims 1 to 3,
   wherein the hydroxy group content as measured by $^1$H-NMR is 90 mol% or higher.

5. The modified polyvinyl alcohol resin according to any one of claims 1 to 4,
   wherein the degree of crystallinity as measured by DSC is 20% or lower.

6. The modified polyvinyl alcohol resin according to any one of claims 1 to 5,
   wherein the structural unit containing a hydrophilic modifying group is derived from a C3-C15 unsaturated fatty acid or its derivative.

7. The modified polyvinyl alcohol resin according to any one of claims 1 to 6,
   wherein the modified polyvinyl alcohol resin has a viscosity average degree of polymerization of 300 or higher and 3,500 or lower.

8. The modified polyvinyl alcohol resin according to claim 1,

   wherein the modified polyvinyl alcohol resin has a main peak m in a retention time range from 12 to 25 min and a half width of the main peak m of 2.5 min or less as measured by high-performance liquid chromatography using a gradient elution method in which a mixing ratio of a solvent A and a solvent B is changed with time,
   in the gradient elution method, the solvent A is a 0.1% by weight aqueous formic acid solution, the solvent B is methanol, a mobile phase flow rate is 0.8 ml/min, and the mixing ratio is linearly changed such that a proportion of the solvent A is 90% by weight at a start of measurement, maintained at 90% by weight for 10 min from the start of measurement, and reduced to 0% by weight after 20 min from the start of measurement, and

the modified polyvinyl alcohol resin has a viscosity average degree of polymerization of 200 or higher and 5,000 or lower.

**9.** The modified polyvinyl alcohol resin according to claim 8,
wherein a peak top of the main peak m in the retention time range from 12 to 25 min has a retention time of 17 min or shorter.

**10.** The modified polyvinyl alcohol resin according to claim 8 or 9,
wherein the hydrophilic modifying group is a carboxy group or its derivative.

**11.** The modified polyvinyl alcohol resin according to any one of claims 8 to 10,
wherein the modified polyvinyl alcohol resin has an acetyl group content of 2 mol% or lower as measured by $^1$H-NMR.

**12.** The modified polyvinyl alcohol resin according to any one of claims 8 to 11,

wherein the modified polyvinyl alcohol resin has a main peak n in a retention time range from 12 to 25 min as measured by high-performance liquid chromatography using a gradient elution method in which a mixing ratio of a solvent A and a solvent B is changed with time,
in the gradient elution method, the solvent A is water, the solvent B is methanol, a mobile phase flow rate is 0.8 ml/min, and the mixing ratio is linearly changed such that a proportion of the solvent A is 90% by weight at a start of measurement, maintained at 90% by weight for 10 min from the start of measurement, and reduced to 0% by weight after 20 min from the start of measurement, and
the main peak n has a proportion of an area A to an area B [(area A/area B) $\times$ 100] of 0.5% or higher, where the area A is an area of the main peak n in a retention time range of 0.9X or less, X being a retention time of a peak top of the main peak n, and the area B is a total area of the main peak n.

**13.** The modified polyvinyl alcohol resin according to any one of claims 8 to 12,
wherein the viscosity average degree of polymerization is 2,000 or lower.

**14.** The modified polyvinyl alcohol resin according to any one of claims 8 to 13,
wherein the hydrophilic modifying group content as measured by $^1$H-NMR is 0.5 mol% or higher.

**15.** The modified polyvinyl alcohol resin according to any one of claims 8 to 14,
wherein the structural unit containing a hydrophilic modifying group is derived from itaconic acid, acrylic acid, or a derivative of itaconic acid or acrylic acid.

FIG.1

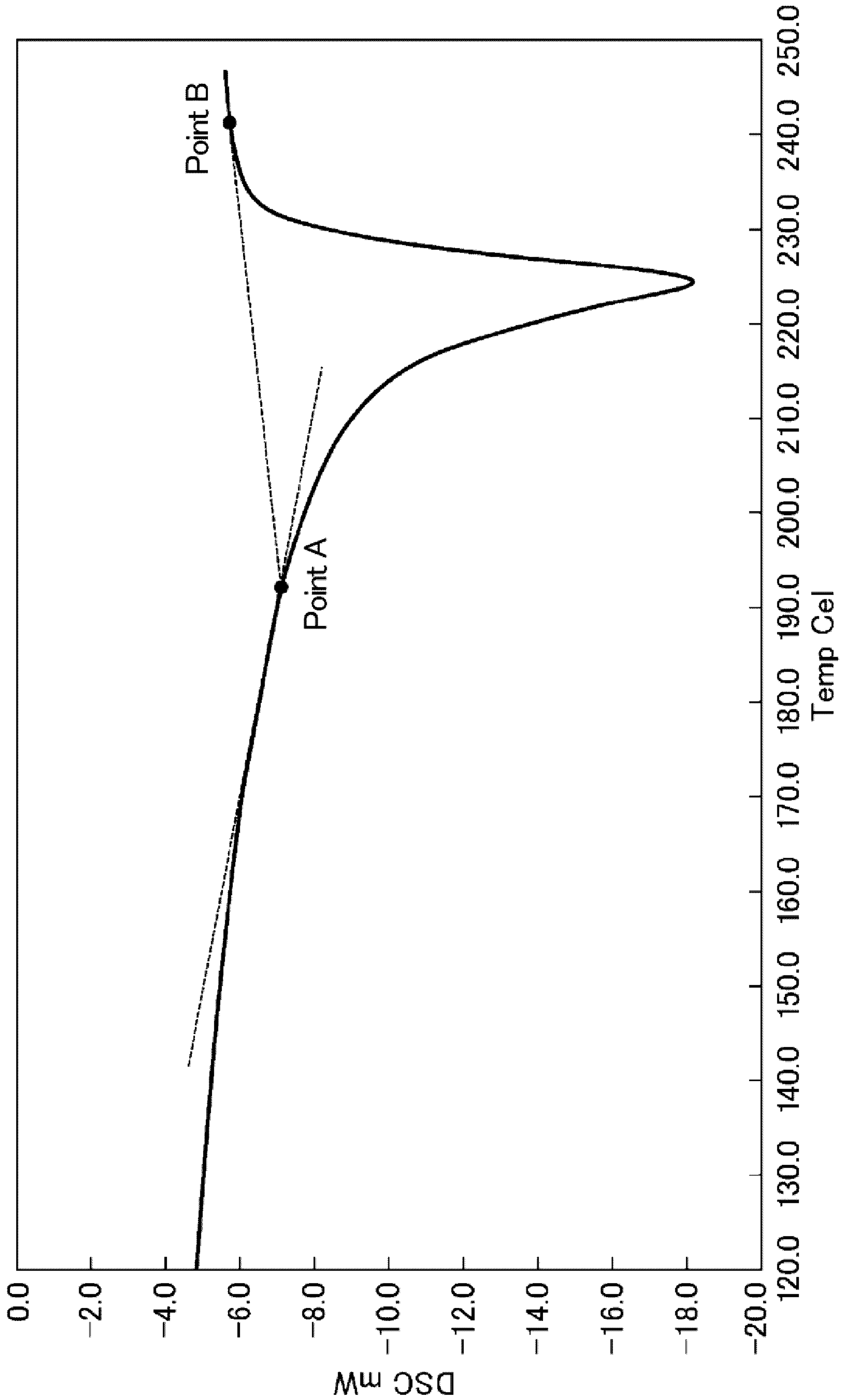
Point A
Point B
Temp Cel
DSC mW
120.0
130.0
140.0
150.0
160.0
170.0
180.0
190.0
200.0
210.0
220.0
230.0
240.0
250.0
0.0
−2.0
−4.0
−6.0
−8.0
−10.0
−12.0
−14.0
−16.0
−18.0
−20.0

FIG.2

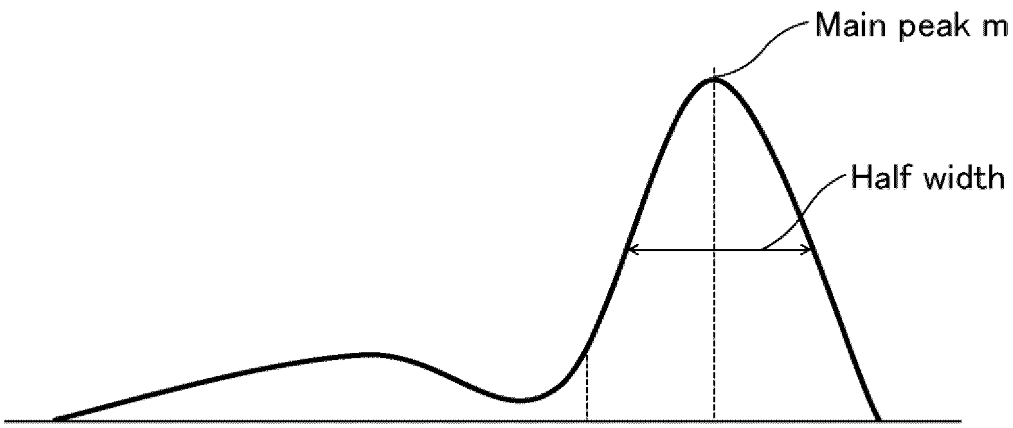


FIG.3

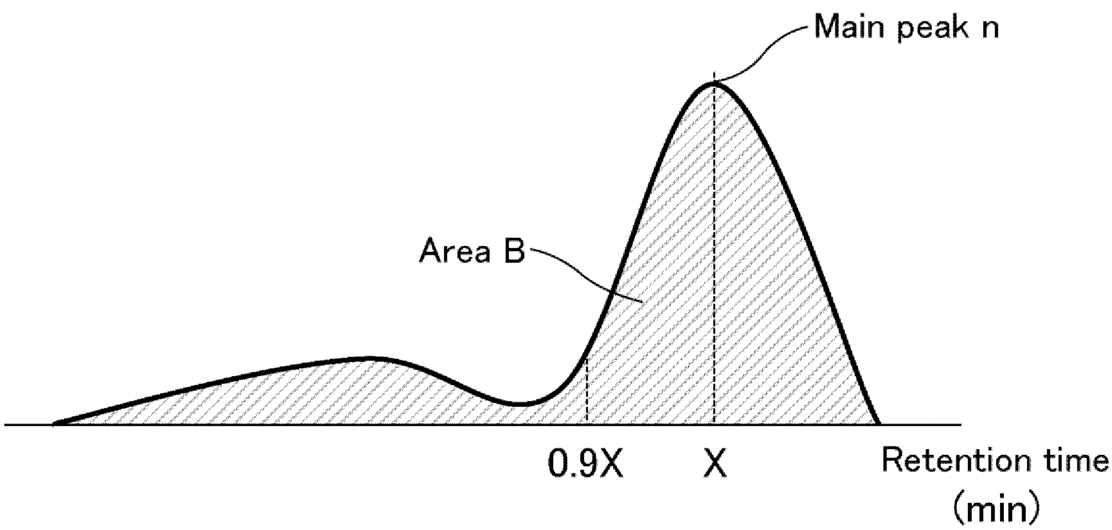


FIG.4

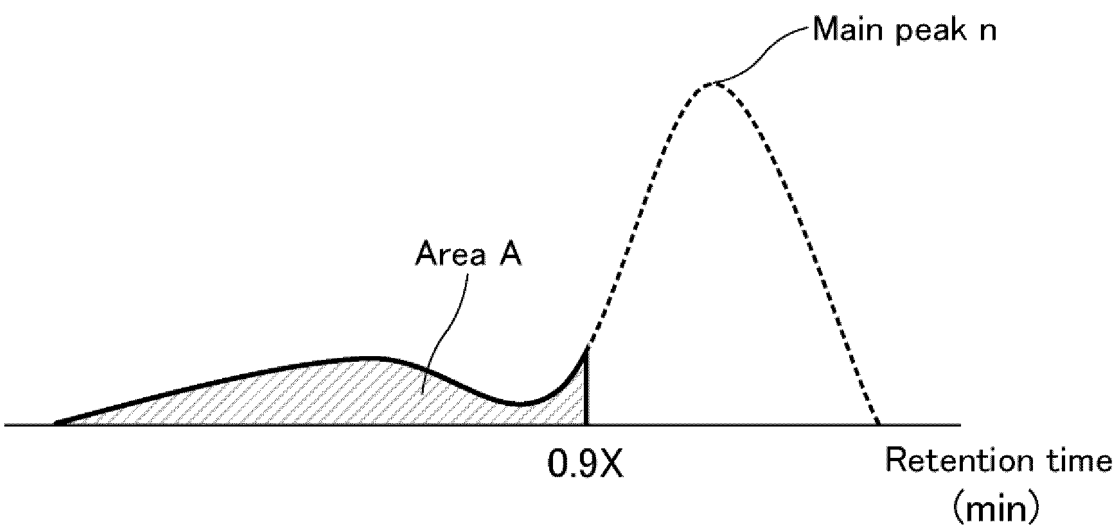

## INTERNATIONAL SEARCH REPORT

International application No. **PCT/JP2023/008579**

**A. CLASSIFICATION OF SUBJECT MATTER**

***C08F 8/12***(2006.01)i
FI: C08F8/12

According to International Patent Classification (IPC) or to both national classification and IPC

**B. FIELDS SEARCHED**

Minimum documentation searched (classification system followed by classification symbols)

C08F,C08J5,G02B5

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 54-33580 A (DENKI KAGAKU KOGYO KK) 12 March 1979 (1979-03-12) example 2 | 1, 3, 5-7 |
| X | JP 55-125865 A (NIPPON SYNTHETIC CHEM IND) 29 September 1980 (1980-09-29) claims, p. 2, upper right column, p. 2, lower right column, example 1 | 1, 3-7 |
| X | JP 56-120707 A (NIPPON SYNTHETIC CHEM IND) 22 September 1981 (1981-09-22) claims, p. 2, upper left column to upper right column, example 4 | 1-15 |
| X | JP 2-163149 A (KAO CORP) 22 June 1990 (1990-06-22) claims, p. 2, lower right column, examples, tables 1, 2 | 1-15 |
| X | JP 4-170405 A (KURARAY CO LTD) 18 June 1992 (1992-06-18) claims, p. 1, lower right column, p. 3, upper right column, p. 5, example 1 | 1-15 |
| X | JP 9-241466 A (KURARAY CO LTD) 16 September 1997 (1997-09-16) claims, paragraphs [0007], [0008], example 1 | 1-15 |
| X | JP 10-60207 A (DAI ICHI KOGYO SEIYAKU CO LTD) 03 March 1998 (1998-03-03) claims, paragraph [0015], production example 1 | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 April 2023** | **16 May 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/008579**

**C. DOCUMENTS CONSIDERED TO BE RELEVANT**

| Category* | Citation of document, with indication, where appropriate, of the relevant passages | Relevant to claim No. |
|---|---|---|
| X | JP 2006-63242 A (DENKI KAGAKU KOGYO KK) 09 March 2006 (2006-03-09) claims, paragraphs [0004], [0010], example 1 | 1-15 |

Form PCT/ISA/210 (second sheet) (January 2015)

**INTERNATIONAL SEARCH REPORT**
**Information on patent family members**

International application No.
**PCT/JP2023/008579**

| Patent document cited in search report | Publication date (day/month/year) | Patent family member(s) | Publication date (day/month/year) |
|---|---|---|---|
| JP 54-33580 A | 12 March 1979 | (Family: none) | |
| JP 55-125865 A | 29 September 1980 | (Family: none) | |
| JP 56-120707 A | 22 September 1981 | (Family: none) | |
| JP 2-163149 A | 22 June 1990 | (Family: none) | |
| JP 4-170405 A | 18 June 1992 | (Family: none) | |
| JP 9-241466 A | 16 September 1997 | (Family: none) | |
| JP 10-60207 A | 03 March 1998 | (Family: none) | |
| JP 2006-63242 A | 09 March 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021098802 A
- WO 2020116414 A
- WO 2015020046 A
- JP 2018002983 A